# EUROPÄISCHE PATENTSCHRIFT

(11) **EP 1 053 606 B1**
(45) Veröffentlichungstag und Bekanntmachung des Hinweises auf die Patenterteilung: **15.01.2003**
(21) Anmeldenummer: 98909332.3
(22) Anmeldetag: 05.02.1998
(51) Int. Cl.: H04B 7/26, H04Q 7/20

(54) **VERFAHREN ZUM AUFBAU EINER FUNKVERBINDUNG UND EIN TELEKOMMUNIKATIONSNETZ**
METHOD FOR ESTABLISHING A RADIO COMMUNICATION AND TELECOMMUNICATION NETWORK
PROCEDE D'ETABLISSEMENT D'UNE COMMUNICATION RADIO, ET RESEAU DE TELECOMMUNICATION

(43) Veröffentlichungstag der Anmeldung: 22.11.2000
(73) Patentinhaber: TTH AG, 3013 Bern (CH); IP2H AG, 3013 Bern (CH)
(72) Erfinder: ARNOLD, Jörg, D-69117 Heidelberg (DE)
(74) Vertreter: Naumann, Ulrich, Dr.-Ing.
(86) Internationale Anmeldenummer: DE9800314
(87) Internationale Veröffentlichungsnummer: WO99040694

(56) Entgegenhaltungen:
- DE-A- 3 337 648
- US-A- 5 652 751
- MAHAJAN A O ET AL: "A SELF-ORGANISATION PLANE FOR DISTRIBUTED MOBILE WIRELESS NETWORKS" BRINGING TELECOMMUNICATION SERVICES TO THE PEOPLE - ISS & N 1995, THIRD INTERNATIONAL CONFERENCE ON INTELLIGENCE IN BROADBAND SERVICE AND NETWORKS, HERAKLION, CRETE, OCT. 16 - 19, 1995. PROCEEDINGS, Nr. CONF. 3, 16. Oktober 1995, Seiten 225-236, XP000593478 CLARKE A;CAMPOLARGO M; KARATZAS N (EDS )

## Beschreibung

Die Erfindung betrifft ein Verfahren zum Aufbau einer Funkverbindung zwischen Teilnehmern eines Telekommunikationsnetzes, insbesondere in einem dezentral organisierten Mobilfunknetz mit sowohl als Endgeräte als auch als Übermittler dienenden Mobilfunkgeräten.

Des weiteren betrifft die Erfindung ein Telekommunikationsnetz, insbesondere dezentral organisiertes Mobilfunknetz mit sowohl als Endgeräte als auch als Übermittler dienenden Mobilfunkgeräten.

Verfahren der in Rede stehenden Art sind im Zusammenhang mit Funknetzen, wie bspw. den Mobilfunknetzen C-, D1-, D2- und E-plus-Netz bekannt. Des weiteren sind Telekommunikationsnetze der in Rede stehenden Art aus der Praxis bekannt. Die bekannten Telekommunikationsnetze weisen zum Aufbau einer Funkverbindung stationäre Funkeinrichtungen in Form von stationären Übermittlem auf. Das Herstellen einer Funkverbindung erfolgt mittels externer Vermittlungsverfahren im Rahmen eines externen Funknetzmangagements. Die Lokalisation der Netzteilnehmer und die Verbindungsaufnahme zwischen den Netzteilnehmern erfolgt in diesen Mobilfunknetzen mittels der zentralen Vermittlungseinrichtung.

Beim Herstellen einer Funkverbindung spielen die zentralen Übermittler die grundlegende Rolle, da sie über eine Aufteilung des Funknetzgebiets in einzelne Netzzellen in einem ständigen wechselseitigen Kontakt mit den Netzteilnehmem stehen. So ist dem jeweiligen Übermittler der Aufenthaltsort des Netzteilnehmers durch dessen Rückmeldung bei dem Übermittler und dann weitergehend bei der Netzzentrale stets bekannt.

Beim Herstellen einer Funkverbindung zwischen zwei Netzteilnehmern werden die Netzteilnehmer zunächst mittels des zentralen Vermittlungsverfahrens lokalisiert.

Anschließend wird die Funkverbindung zwischen den Netzteilnehmern berechnet bzw. festgelegt und dann aufgeschaltet. Die vorläufige Berechnung bzw. Festlegung des Verbindungspfads über mögliche Teilverbindungen wird dabei "routing" genannt.

Die bekannten Verfahren wirken zwischen den Mobilfunkgeräten und den stationären Übermittlern der jeweiligen Netzzellen der bekannten Funknetze. Bei den bekannten Funknetzen dieser Art ist also wesentlich, daß externe und zentral gesteuerte Verfahren Anwendung finden, die im wesentlichen von einer externen Betreiberstelle - bspw. einem zentralen Betriebsrechner - außerhalb der einzelnen Mobilfunkgeräte bzw. Funkendgeräte betrieben werden.

Neben diesen bekannten Verfahren und Telekommunikationsnetzen mit stationären Übermittlern sind auch Verfahren und Telekommunikationsnetze bekannt, die vollkommen dezentral organisiert sind und bei denen Mobilfunkgeräte sowohl als Endgeräte als auch als Übermittler dienen. Dabei wird auf stationäre Übermittlerstationen, die zentral gesteuert sind, verzichtet. Siehe hierzu insbesondere die deutsche Patentanmeldung 195 35 021.9 der Anmelderin, in der ein Funknetz beschrieben ist, bei dem die Mobilfunkgeräte sowohl als Endgeräte als auch als Übermittler dienen. Das beschriebene Funknetz ist als neuronales Netz aufgebaut, das vollständig selbstverwaltend und selbststeuemd ist.

Die vorliegende Erfindung wird ohne Beschränkung auf diesen Netztyp am Beispiel des oben beschriebenen neuronalen Funknetzes erläutert, bei dem die Mobilfunkgeräte sowohl als Endgeräte als auch als Übermittler dienen. Bei diesem System werden keine stationären Funknetzzellen mehr gebildet. Es ist damit kein Zellularsystem, verfügt jedoch über wesensgleiche dynamische Nachbarschaftsbereiche eines jeden Teilnehmers. Die Größe eines derartigen, im wesentlichen kreisförmigen Nachbarschaftsbereichs um einen betrachteten Teilnehmer herum bemißt sich durch diejenige Distanz vom betrachteten Teilnehmer, in welcher der Funkverkehr des betrachteten Teilnehmers noch durch einen anderen, benachbarten Teilnehmer mitgehört werden kann. Diese Distanz ist - bei unbehinderter Funkausbreitung - der Radius des Nachbarschaftsbereichs. Bei lokalen Funkstörungen oder Funkhindernissen kann der Nachbarschaftsbereich auch eine von einem Kreis abweichende Form annehmen.

Die Größe eines Nachbarschaftsbereichs ist weiterhin funkaufkommensabhängig. Der Nachbarschaftsbereich bewegt sich bei Bewegung des betrachteten Teilnehmers mit dem Teilnehmer mit. Es handelt sich bei dem in Rede stehenden Telekommunikationsnetz daher um ein echtes vollständiges Bewegtnetz. Bewegtnetze lassen sich anderweitig nur durch investitionskostenintensive Satellitenmobilnetzsysteme verwirklichen. Dieses Funknetz ist ein Verteilnetz ohne zentral organisierten Vermittlungsdienst. Die Vermittlung wird nach einem Zielteilnehmeraufruf durch einen oder mehrere Teilnehmer automatisch und kollektiv ausgeführt.

Ein aktiver Teilnehmer - der Quellenteilnehmer - bildet mit einem seiner nächsten Nachbarn, mit denen er in einen direkten Funkkontakt tritt, eine Netzteilverbindung. Diese Nachbarn dienen, soweit sie nicht die angesprochenen Zielteilnehmer sind, als Übermittler. Die Funkverbindung zwischen dem Quellenteilnehmer und dem Zielteilnehmer kann über mehrere Übermittler stattfinden. Die Netzverbindung besteht dann aus mehreren Netzteilverbindungen zwischen den einzelnen Übermittlern.

Zur Lokalisierung und Adressierung der Teilnehmer ist den Teilnehmern eine nach gewissen Zeitabständen aktualisierbare Positionskennung zugeordnet, die jedem Teilnehmer über ein Adressierungsverzeichnis bekannt bzw. im Mobilfunkgerät abgespeichert ist. Diese Positionskennung ist bei einer zielgerichteten Funkverbindungsaufnahme nützlich, da hierdurch eine lawinenartige Ausbreitung eines Funkaufrufs zum Aufbau einer Funkverbindung vermieden werden kann und stattdessen die Richtung zum Zielempfänger schon in etwa vorgegeben werden kann. Ein derartiges Verfahren zum Herstellen einer Funkverbindung ist in der deutschen Patentanmeldung 197 26 956.7 der Anmelderin bereits beschrieben.

Bei dem bisherigen Entwicklungsstand des oben beschriebenen neuronalen Telekommunikationsnetzes sind teilweise quasi ortsfeste Übermittler vorgesehen, die durch einen funktionellen Teil eines Mobilfunkgeräts gebildet werden. Jeder Nutzer verfügt über ein Mobilfunkgerät, das aus einem Endgeräteelement und einem räumlich trennbaren Übermittlerelement besteht. Dieses Übermittlerelement wird als quasi stationärer Heimübermittler mit fester Positionskennung beim Benutzer ortsfest installiert. Sämtliche Funkverbindungen des Benutzers, jedoch auch beliebige Funkverbindungen anderer Teilnehmer können damit über das ihm zugeordnete Übermittlerelement oder über Übermittlerelemente anderer Teilnehmer erfolgen.

Neben der Positionskennung verfügt ein Teilnehmer auch über eine teilnehmerspezifische Kennung. Dies könnte bspw. der Name des Benutzers sein.

Bei ständig stationären Teilnehmern ist die Herstellung einer Funkverbindung ausschließlich über die Positionskennung möglich. Sobald sich der Teilnehmer mit seinem Endgeräteelement bewegt, ist dies auf den ersten Blick hin nicht mehr möglich, da er die den anderen Teilnehmern bekannte Position verlassen hat und die anderen Teilnehmer die neue Position des Zielteilnehmers dann noch nicht kennen. Jedoch ist eine Bewegung des Zielteilnehmers innerhalb des Nachbarschaftsbereichs des in der Funkkette ihm nächstgelegenen Übermittlers unkritisch, da der Zielteilnehmer den Funkaufruf dieses nächstgelegenen Übermittlers hören kann und sich als Zielteilnehmer über die teilnehmerspezifische Kennung zu erkennen geben kann. Damit ist die Funkverbindung vollständig herstellbar.

Ein Funkverbindungsaufbau oder eine aufgeschaltete Funkverbindung bleibt bei einem derartigen Telekommunikationsnetz von einer Teilnehmerbewegung ebenfalls unberührt, solange sich die Nachbarschaftsbereiche der Teilnehmer einer Funkverbindungskette bzw. der Übermittler teilweise überlappen. Mit anderen Worten bleibt eine Funkverbindung oder ein Funkverbindungsaufbau solange möglich, wie sich der Zielteilnehmer mit seinem Endgeräteelement innerhalb des Nachbarschaftsbereichs irgendeines Übermittlers der Funkverbindungskette befindet. Dies ist dadurch zu erklären, daß jeder Übermittler während seiner Übermittlungsarbeit die vollständige Zielteilnehmeradressierung - Positionskennung und teilnehmerspezifische Kennung - mit übermittelt und der Zielteilnehmer die Übermittlungsvorgänge der Übermittler mithört und sich dann ggf. als Zielteilnehmer zu erkennen geben kann. Dieser hinsichtlich des Funkverbindungsaufbaus und der Funkverbindung während der Bewegung eines Zielteilnehmers unkritische räumliche Bereich der zusammengesetzten Nachbarschaftsbereiche sämtlicher Übermittler wird als Funkschlauch bezeichnet. Mit anderen Worten ist der Funkschlauch diejenige Gebietsfläche, die durch die Nachbarschaftsbereichsflächen der Verbindungskettenteilnehmer einer Funkverbindung überdeckt wird.

Bewegt sich ein Zielteilnehmer jedoch aus den oben genannten Nachbarschaftsbereichen der vorgesehenen Übermittler heraus, so erfolgt ein anderer Lokalisierungsmechanismus hinsichtlich des betrachteten Teilnehmers, bei dem eine Positionsneubestimmung des Teilnehmers in seiner neuen Position zu erfolgen hat. Diese neue Positionskennung wird an bspw. seinen ortsfesten Heimübermittler übermittelt, der dann über diesen erfolgende Funkaufrufe an den betrachteten Teilnehmer weiterleiten kann.

Zusammenfassend bleibt festzuhalten, daß der jeweilige Heimübermittler eines Endteilnehmers im wesentlichen permanent ortsfest ist und daß seine Positionskennung im Netzteilnehmer- bzw. Adressierungsverzeichnis des Telekommunikationsnetzes verzeichnet ist. Bewegte Netzteilnehmer können dann über den zugeordneten Heimübermittler angesprochen werden. Dieser leitet die Funkverbindung als Übermittler zum bewegten Netzteilnehmerendgerät hin weiter.

Die US-A-5 652 751 beschreibt ein dezentral organisiertes Telekommunikationsnetz, bei dem die Mobilfunkgeräte sowohl als Endgeräte als auch als Übermittler dienen. Durch Aufteilung der physikalischen Teilnehmer in physikalische und virtuelle Unternetze wird eine topologische Struktur bereitgestellt, mit der zwischen regionalen und lokalen Netzen unterschieden werden kann, wobei die physikalischen Unternetze über die virtuellen Unternetze verbunden sind.

Bei dem bekannten Telekommunikationsnetz ist jedoch problematisch, daß eine quasi stationäre Struktur in Form der Heimübermittler vorliegt. Eine derartige Struktur wird üblicherweise als "backbone" bezeichnet. Eine derartige ortsfeste Struktur schränkt die Flexibilität des Telekommunikationsnetzes und der Teilnehmer stark ein, da immer ein Heimübermittler zu positionieren und permanent mit zwei Gerätekomponenten - Endgeräteelement und Übermittlerelement - umzugehen ist. Die Aufteilung der Teilnehmer in physikalische und virtuelle Unternetze machen den Aufbau einer Funkverbindung zwischen Teilnehmen sowie das Mobilfunknetz als solches in der Handhabung sehr aufwendig.

Der vorliegenden Erfindung liegt daher die Aufgabe zugrunde, ein Verfahren zum Aufbau einer Funkverbindung sowie ein Telekommunikationsnetz der in Rede stehenden Art anzugeben, wonach eine höhere Flexibilität und Bequemlichkeit bei der Nutzung erreicht ist.

Erfindungsgemäß wird die voranstehende Aufgabe hinsichtlich des Verfahrens mit den Merkmalen des Patentanspruches 1 gelöst. Danach ist das in Rede stehende Verfahren derart ausgestaltet, daß zu jedem Teilnehmer mindestens ein virtueller Übermittler zur Vermittlung der Funksignale definiert werden kann und ein oder mehrere Teilnehmer die Arbeit des oder der virtuellen Übermittler übernehmen können, wobei der virtuelle Übermittler für einen Funkverbindungsaufbau zwischen einem Signalsender und einem Signalempfänger dem Signalempfänger zugeordnet wird und wobei dem virtuellen Übermittler die Positionskennung eines vorherigen Aufenthaltsorts des Signalempfängers oder eine frei wählbare und nicht von einem anderen Teilnehmer belegte Positionskennung zugeordnet wird.

In erfindungsgemäßer Weise ist zunächst erkannt worden, daß es grundsätzlich möglich ist, ein Telekommunikationsnetz und ein Verfahren zum Aufbau einer Funkverbindung innerhalb des Telekommunikationsnetzes zu realisieren, bei dem auf feste Strukturen im Sinne eines "backbone" verzichtet wird. Hierzu ist in weiter erfindungsgemäßer Weise zu jedem Teilnehmer mindestens ein virtueller Übermittler zur Vermittlung der Funksignale definiert. Durch die Definition eines derartigen virtuellen Übermittlers kann auf die bekannten ortsfesten und realen Heimübermittler verzichtet werden. Da ein derartiger virtueller Übermittler nicht physisch vorhanden ist, übernehmen in weiter erfindungsgemäßer Weise ein oder mehrere Teilnehmer die Arbeit des oder der virtuellen Übermittler. Die Teilnehmer, die die Arbeit des oder der virtuellen Übermittler übernehmen, sind vorzugsweise zeitweise ortsfest. Eine für das Funktionieren des Netzes ausreichende Anzahl ortsfester Teilnehmer ist bei dem in Rede stehenden Telekommunikationsnetz statistisch gesehen immer vorhanden, da es unwahrscheinlich ist, daß sich sämtliche Teilnehmer des Telekommunikationsnetzes ständig in Bewegung befinden.

Folglich ist mit dem erfindungsgemäßen Verfahren zum Aufbau einer Funkverbindung ein Verfahren realisiert, bei dem eine höhere Flexibilität und Bequemlichkeit bei der Nutzung erreicht und damit ein höherer Bewegungsanteil der Netzteilnehmer ermöglicht ist.

In besonders vorteilhafter Weise könnten der oder die Teilnehmer, die die Arbeit des oder der virtuellen Übermittler übernehmen, den oder die virtuellen Übermittler durch die Übernahme der Arbeit einzeln oder kollektiv realisieren. Hierdurch wäre eine besonders einfache Realisierung von virtuellen Übermittlem erreicht.

Der virtuelle Übermittler für einen Funkverbindungsaufbau zwischen einem Signalsender und einem Signalempfänger könnte des weiteren dem Signalempfänger zugeordnet sein. Hierdurch wäre durch den virtuellen Übermittler quasi ein virtueller Heimübermittler für den Signalempfänger realisierbar.

Hierzu könnte dem virtuellen Übermittler in besonders direkter Weise die Positionskennung eines vorherigen Aufenthaltsorts des Signalempfängers zugeordnet werden. Eine Definition des virtuellen Übermittlers durch Zuordnung einer derartigen Positionskennung hätte dann zur Folge, daß ein Funkaufruf an den Signalempfänger an dessen bekannten vorherigen Aufenthaltsort geleitet wird. Dort wäre er grundsätzlich nicht mehr erreichbar, da er sich bereits von diesem Ort fortbewegt hat. Bei der Definition des virtuellen Übermittlers, welche durch einen Funkaufruf an die gewünschte Position des zu definierenden virtuellen Übermittlers erfolgt, werden die Übermittler im Nachbarschaftsbereich der gewünschten Position des virtuellen Übermittlers jedoch über eine besondere Codierung des Funkaufrufs darüber informiert, daß es sich an dem betreffenden Ort nur um einen virtuellen Übermittler handelt. Folglich können die benachbarten Übermittler den Funkaufruf ggf. arbeitsteilig an den Zielteilnehmer weiterleiten, dessen neue Position während der Definition des virtuellen Übermittlers an die Übermittler des Nachbarschaftsbereichs der gewünschten Position des virtuellen Übermittlers mitgeteilt wurde. Folglich könnten die Funksignale über den virtuellen Übermittler an den Signalempfänger bzw. Zielteilnehmer weitergeleitet werden.

Alternativ zu einer derartigen Weiterleitung könnte der virtuelle Übermittler einem vorherigen Übermittler und/oder dem Signalsender die neue, veränderte Positionskennung des Signalempfängers bzw. Zielteilnehmers übermitteln. Damit stehen zwei Möglichkeiten der Vermittlung der Funksignale durch die virtuellen Übermittler zur Verfügung.

Die Bestimmung der Positionskennung kann in schneller und automatisierter Weise dadurch erfolgen, daß der bewegte Signalempfänger seine neue Positionskennung aus den mitgehörten Positionskennungen seiner Nachbarteilnehmer in seinem aktuellen Nachbarschaftsbereich errechnet. Genauergesagt lokalisiert sich der betrachtete Signalempfänger mit Hilfe von zumindest zeitweise stationären Übermittlem in seinem "neuen" Nachbarschaftsbereich. Dies erfolgt dadurch, daß der betrachtete Teilnehmer als potentieller Übermittler anderer Funkverbindungen den Funkverkehr seines Nachbarschaftsbereichs mithört und die Positionskennungen der Nachbarteilnehmer in seinem Nachbarschaftsbereich empfängt und speichert. Diese Daten kann er benutzen, um seine eigene tatsächliche Position zu errechnen. Hierzu stehen übliche Interpolationsverfahren zur Verfügung. Falls sich die Positionskennung aus bspw. absoluten satellitengestützen Daten errechnet, sind sogar exakte eigene Positionskennungen erzeugbar.

Neben der Zuordnung der Positionskennung eines vorherigen Aufenthaltsorts des Signalempfängers zu dem virtuellen Übermittler könnte dem virtuellen Übermittler zur Erhöhung der Flexibilität auch eine frei wählbare und/oder nicht von einem anderen Teilnehmer belegte Positionskennung zugeordnet werden. Somit wäre ein virtueller Heimübermittler in Ortslagen definiert, an denen sich der Signalempfänger niemals aufgehalten hat.

In flexibler Weise könnte der virtuelle Übermittler durch den Signalempfänger aktiv auf eine Benutzeraktion hin oder automatisch in Abhängigkeit vom Erfüllen einer vorgebbaren Bedingung definiert werden. Hierbei könnte der Benutzer die Häufigkeit der Definition eines virtuellen Übermittlers davon abhängig machen, wie sicher er im Telekommunikationsnetz erreichbar sein möchte. Je häufiger er virtuelle Übermittler durch einen Funkaufruf definiert wird bzw. je häufiger er seine ggf. geänderte Positionskennung an ggf. bereits vorhandene virtuelle Übermittler mitteilt, je besser und je sicherer ist er erreichbar. Die Definition eines virtuellen Übermittlers in Abhängigkeit vom Erfüllen einer vorgebbaren Bedingung könnte bspw. eine zeitliche Bedingung sein, d.h. die Definition eines virtuellen Übermittlers erfolgt in vorgebbaren Zeitabständen automatisch.

In besonders komfortabler Weise könnte das automatische Definieren erfolgen, nachdem der Signalempfänger seinen ursprünglichen Nachbarschaftsbereich verlassen hat oder nachdem ein vorgebbarer oder mehrere vorgebbare, im ursprünglichen Nachbarschaftsbereich befindliche Teilnehmer diesen oder ihren ursprünglichen Nachbarschaftsbereich verlassen haben oder nachdem der Signalempfänger den Nachbarschaftsbereich eines vorgebbaren oder mehrerer vorgebbarer Teilnehmer verlassen hat. Die erste Alternative schildert den Fall, bei dem der Signalempfänger aufgrund des Verlassens seines ursprünglichen Nachbarschaftsbereichs die Wahrscheinlichkeit dafür, daß er sicher erreicht werden kann, deutlich reduziert hat. Die zweite Alternative berücksichtigt den Fall, bei dem bestimmte Übermittler nicht mehr zur Verfügung stehen und damit ggf. die Übermittlerdichte derart reduziert ist, daß eine sichere Erreichbarkeit des Signalempfängers nicht mehr gewährleistet ist. Die dritte Alternative berücksichtigt den zur zweiten Alternative ähnlichen Fall, daß bestimmte, auch ursprünglich außerhalb des ursprünglichen Nachbarschaftsbereichs des Signalempfängers befindliche Übermittler nicht mehr zur Verfügung stehen. Jedoch stehen diese Übermittler nicht mehr zur Verfügung, weil sich diesmal der Signalempfänger und nicht die Übermittler bewegt hat. Eine automatische Definition eines oder mehrerer virtueller Übermittler könnte jedoch auch dann erfolgen, wenn sich ein vorgebbarer oder mehrere vorgebbare Teilnehmer aus ihrem Nachbarschaftsbereich entfernt haben, wobei sich die hierbei betrachteten Teilnehmer ursprünglich nicht im Nachbarschaftsbereich des Signalempfängers befunden haben müssen.

Je nach Adressierungs- oder Positionskennungssystem könnte den Teilnehmern eine ortsbezogene und/oder eine teilnehmerbezogene Kennung zugeordnet sein.

Die Definition virtueller Übermittler erfolgt entsprechend dem gewählten Kennungssystem.

Zum besseren Verständnis des obigen Verfahrens zum Aufbau einer Funkverbindung wird dieses noch einmal zusammenfassend beschrieben:

Falls sich der betrachtete Endteilnehmer aus seiner ursprünglichen Ortslage fortbewegt, meldet er sich in bestimmten Zeitabständen bei den Teilnehmern seines ursprünglichen Nachbarschaftsbereichs, um seine neue Positionskennung zu übermitteln. Hierbei adressiert er an seinen zukünftigen virtuellen Heimübermittler, dem die Positionskennung seiner ursprünglichen Ortslage zugeordnet wird. Dieser zur Definition des virtuellen Heimübermittlers dienende Funkaufruf wird zur ursprünglichen Ortslage hin vermittelt, wo er von potentiellen Übermittlern und Nachbarn dieser Ortslage, die eine ähnliche Positionskennung aufweisen, mitgehört und abgespeichert wird. Bei diesem Funkaufruf wird ein entsprechender Funkcodesequenzparameter auf den Modus "Heimübermittlerrückmeldung" gesetzt und übertragen, was bewirkt, daß die potentiellen Übermittler in dem ursprünglichen Nachbarschaftsbereich über den Definitionsvorgang informiert werden und nach einem vorzugsweise erfolgenden Abbruch der Suche nach dem virtuellen Heimübermittler nicht weiter tätig werden. Der Funkverbindungsaufbau bricht also bei diesen Übermittlern ab, da der Zielteilnehmer bzw. der virtuelle Heimübermittler nicht gefunden wird. Jedoch ist dann allen nächsten Nachbarn dieser Ortslage die neue Adresse des betrachteten Zielteilnehmers bekannt.

Derjenige Übermittler, der im Rahmen eines gezielten Funkverbindungsversuchs zu dem betrachteten Teilnehmer in der Funkverbindungskette als letztes Glied steht und keine weitere positive Übernahmemeldung oder Zielteilnehmermeldung erhält, durchsucht dann seinen Speicher nach der angegebenen Zieladresse des gesuchten Netzteilnehmers. Wenn er fündig wird, d.h. wenn Funkrufcodesequenzen mit der Zieladresse des gesuchten Teilnehmers und mit auf "Heimübermittlerrückmeldung" gesetztem Parameter existieren, so übernimmt dieser Übermittler die Rolle des gesuchten virtuellen Heimübermittlers. Er gibt sich als solchen zu erkennen und übermittelt dann entsprechend der Heimübermittlerfunktion die neue Positionskennung des gesuchten Zielteilnehmers oder er verbindet direkt zu diesem hin.

Bei dem beschriebenen Verfahren ist wesentlich, daß sich in einem bestimmten Ortsbereich Netzteilnehmer aufhalten, die sich nicht alle gleichzeitig aus diesem Bereich herausbewegen oder die sich nicht alle gleichzeitig in diesem Bereich bewegen. Dies ist jedoch aus statistischen Gründen nahezu immer erfüllt.

Durch die Einführung von virtuellen Übermittlem wird ein Funkrelaisnetzwerk ohne Hardware, d.h. ohne ein "backbone" realisiert. Anstelle der Verwendung eines "backbone" zur Stützung des Telekommunikationsnetzes wird ein Informationsmuster, z.B. ein Routinginformationsmuster, im Netzwerk abgelegt. Durch die Adressierung von virtuellen Speicherplätzen, welche die virtuellen Übermittler bzw. die Nachbarschaftsbereiche darstellen, kann Routinginformation dezentral überall im Netzwerk abgelegt und genutzt werden.

Durch das Definieren mehrerer virtueller Übermittler könnten in besonders vielseitiger Weise als Baumstrukturen, Sternstrukturen, Ringstrukturen oder gemischte topologische Strukturen ausgebildete Funkverbindungsstrukturen erzeugt werden. Hierdurch könnten ggf. auch komplizierte Informationsübertragungsverbindungen mit Knoten- und Verteilerpunkten gezielt vorher festgelegt werden, um z.B. Medieninformation zu verbreiten, die für eine ganze Gruppe von Empfängern bestimmt ist.

Die für den Aufbau einer Funkverbindung wesentliche Funkrufcodesequenz, die bspw. die Zielteilnehmerkennung, die Übermittlerkennung des vorher sendenden Teilnehmers, den Zeitpunkt der Sendung durch den Signalsender, die Positionskennung des Signalsenders, einen Parameter zur Erkennung einer Heimübermittlerrückmeldung und Parameter hinsichtlich der Sendeleistungspriorität enthält, könnte auch vom Nutzinhalt abhängige thematische Prioritätsparameter enthalten. D.h., je nach Nutzinhaltkennung erfolgt die Übertragung mit höherer oder niedrigerer Priorität. Eine derartige Kennung gibt neben der Festlegung der Priorität solcher Übermittlungen auch eine Unterscheidung verschiedener thematischer Übermittlungen. Thematische Informationsübermittlungen können unidirektional zu übertragende Medienanwendungen mit einer Quelle und verschiedenen Zielendteilnehmern sein. Es können Datenübermittlungen zwischen mehreren Quellen und mehreren Zielendteilnehmern, Konferenzschaltungen oder Maklerschaltungen sein.

Die Übertragung solcher Informationsflüsse kann in der Funkaufnahmeprozedur vorzugsweise über Übermittler festgelegt werden, die dieses Thema in einer bestimmten vergangenen Zeitdauer bereits übermittelt haben. Der Zielübermittler mit thematischer Priorität gibt thematische Funkaufrufe, die für irgendeinen bestimmten Zielteilnehmer bestimmt sind, automatisch an alle anderen ihm bekannten Zielteilnehmer mit gleicher Signalsenderkennung und gleicher thematischer Prioritätsnummer weiter. Dadurch erreichen gleichartige Informationsflüsse, die für mehrere Zielteilnehmer von dem gleichen Quellenteilnehmer ausgehen, die Zielteilnehmer nicht mehr über viele unterschiedliche, individuell aufzuschaltende bzw. aufrechtzuerhaltende Funkpfade, sondern über gemeinsame Teilfunkpfade bzw. Teilfunkverbindungsketten mit gleichen Übermittlern, die an den Verzweigungspunkten gleichzeitig als Verteiler arbeiten.

Durch eine thematische Übermittlerselektion können thematisch selektierte Übermittler Funkpfade untereinander aufbauen. Es entstehen dann neben den adressenbestimmten Funkpfaden auch thematisch bestimmte Funkpfade bzw. thematische Unternetze. Durch die Reduktion einer thematischen Übertragung auf thematisch gewählte Übermittler entsteht nach der Prozedur automatisch ein thematisches Untemetz mit einer minimalen Anzahl von Übermittlern in Funkpfaden bzw. Teilfunkpfaden bzw. Teilfunkverbindungsketten, die sich bevorzugt kongruent überlagern bzw. sternförmige, ringförmige oder verästelte Baumstrukturen der Übertragungswege bilden.

Diese thematischen Funkpfade stimmen bis zu den Verzweigungen zu den unterschiedlichen Empfängern überein. An den Verzweigungsstellen werden vom diesbezüglichen Übermittler ggf. mehrere weitere Zielübermittler direkt adressiert angesprochen. Durch eine thematische Selektion entstehen aus bisherigen einfachen Übermittlern automatisch Verteiler bzw. Verteilerknotenpunkte.

Thematische Funkübertragungen minimieren die Funkaktivität des Funknetzes automatisch. Zum einen können Informationen von der Informationsquelle aus über gemeinsame Teilfunkpfade mit einer minimalen Zahl an gemeinsamen Übermittlern zu verschiedenen Endteilnehmern hin übertragen werden. Zum anderen müssen einzelne Endteilnehmer, die thematische Funkübertragungen von einer Quelle anfordern, ggf. keinen Funkkontakt mehr bis zum Quellenteilnehmer hin aufbauen, sondern sie müssen nur irgendeinen Übermittler finden, der bereits in die thematische Übertragung eingeschaltet ist, um sich in das thematische Funknetz einzuklinken.

Im Idealfall muß nur ein einziger Endteilnehmer einen Funkkontakt bis zum Zielquellenteilnehmer hin aufbauen. Trotzdem geht den Endteilnehmem nicht die Möglichkeit verloren, ggf. interaktive Informationen an die Zielquelle zu senden. Für den Fall, daß die thematischen Informationsübertragungen zeitliche Informationsprogramme sind, muß vom Quellenteilnehmer nur jeweils ein Informationspaket für alle thematischen Endteilnehmer aufgegeben werden.

An dieser Stelle sei noch erwähnt, daß durch die höhere Bewegungsmöglichkeit der Teilnehmer aufgrund der Realisierung virtueller Übermittler bewegte Übermittler zur Verbindung von verschiedenen solchen Netzen über Verkehrswege der Übermittler, bspw. Autobahnen, Schiffahrtsstraßen und Eisenbahnstrecken, erreicht und verbunden werden können.

Hinsichtlich eines Telekommunikationsnetzes wird die voranstehende Aufgabe durch ein Telekommunikationsnetz mit den Merkmalen des Patentanspruches 13 gelöst. Danach ist ein Telekommunikationsnetz, insbesondere dezentral organisiertes Mobilfunknetz mit sowohl als Endgeräte als auch als Übermittler dienenden Mobilfunkgeräten derart ausgestaltet, daß zu jedem Teilnehmer mindestens ein virtueller Übermittler zur Vermittlung der Funksignale definierbar ist und die Arbeit des oder der virtuellen Übermittler durch einen oder mehrere Teilnehmer übernehmbar ist.

Zur Vermeidung von Wiederholungen wird hinsichtlich der Ausgestaltungsmöglichkeit des Telekommunikationsnetzes auf die vorangehende Beschreibung verwiesen. Insbesondere wird ausdrücklich auf die bei der Erläuterung der Verfahrensansprüche beschriebenen konstruktiven Merkmale eines Telekommunikationsnetzes verwiesen. Eine derartige bevorzugte Ausgestaltung des Telekommunikationsnetzes ist von der Erfindung umfaßt.

## Patentansprüche

1. Verfahren zum Aufbau einer Funkverbindung zwischen Teilnehmern in einem dezentral organisierten Mobilfunknetz mit sowohl als Endgeräte als auch als Übermittler dienenden Mobilfunkgeräten,
**dadurch gekennzeichnet, daß** zu jedem Teilnehmer mindestens ein virtueller, im wesentlichen durch eine Positionskennung gekennzeichneter Übermittler zur Vermittlung der Funksignale definiert werden kann und ein oder mehrere Teilnehmer die Arbeit des oder der virtuellen Übermittier übernehmen können, wobei der virtuelle Übermittler für einen Funkverbindungsaufbau zwischen einem Signalsender und einem Signalempfänger dem Signalempfänger zugeordnet wird und wobei dem virtuellen Übermittler die Positionskennung eines vorherigen Aufenthaltsorts des Signalempfängers oder eine frei wählbare und nicht von einem anderen Teilnehmer belegte Positionskennung zugeordnet wird.

2. Verfahren nach Anspruch 1, **dadurch gekennzeichnet, daß** der oder die Teilnehmer, die die Arbeit des oder der virtuellen Übermittler übernehmen, den oder die virtuellen Übermittler durch die Übernahme der Arbeit einzeln oder kollektiv realisieren.

3. Verfahren nach Anspruch 1 oder 2, **dadurch gekennzeichnet, daß** die Funksignale über den virtuellen Übermittler an den Signalempfänger weitergeleitet werden.

4. Verfahren nach einem der Ansprüche 1 bis 3, **dadurch gekennzeichnet, daß** der virtuelle Übermittler einem vorherigen Übermittler und/oder dem Signalsender die neue, veränderte Positionskennung des Signalempfängers übermittelt.

5. Verfahren nach einem der Ansprüche 1 bis 4, **dadurch gekennzeichnet, daß** der Signalempfänger seine neue Positionskennung aus den mitgehörten Positionskennungen seiner Nachbarteilnehmer in seinem aktuellen Nachbarschaftsbereich errechnet.

6. Verfahren nach einem der Ansprüche 1 bis 5, **dadurch gekennzeichnet, daß** der virtuelle Übermittler durch den Signalempfänger aktiv auf eine Benutzeraktion hin oder automatisch in Abhängigkeit vom Erfüllen einer vorgebbaren Bedingung definiert wird.

7. Verfahren nach Anspruch 6, **dadurch gekennzeichnet, daß** das automatische Definieren erfolgt, nachdem der Signalempfänger seinen ursprünglichen Nachbarschaftsbereich verlassen hat oder nachdem ein vorgebbarer oder mehrere vorgebbare, im ursprünglichen Nachbarschaftsbereich befindliche Teilnehmer diesen oder ihren ursprünglichen Nachbarschaftsbereich verlassen haben oder nachdem der Signalempfänger den Nachbarschaftsbereich eines vorgebbaren oder mehrerer vorgebbarer Teilnehmer verlassen hat.

8. Verfahren nach einem der Ansprüche 1 bis 7, **dadurch gekennzeichnet, daß** den Teilnehmem eine ortsbezogene und/oder eine teilnehmerbezogene Kennung zugeordnet ist.

9. Verfahren nach einem der Ansprüche 1 bis 8, **dadurch gekennzeichnet, daß** durch das Definieren mehrerer virtueller Übermittler als Baumstrukturen, Stemstrukturen, Ringstrukturen oder gemischte topologische Strukturen ausgebildete Funkverbindungsstrukturen erzeugt werden.

10. Dezentral organisiertes Mobilfunknetz mit sowohl als Endgeräte als auch als Übermittler dienenden Mobilfunkgeräten zur Durchführung des Verfahrens nach einem der Ansprüche 1 bis 9,
**gekennzeichnet durch** Mittel zum Definieren mindestens eines virtuellen, im wesentlichen **durch** eine Positionskennung gekennzeichneten Übermittlers zur Vermittlung der Funksignale zu jedern Teilnehmer, wobei die Arbeit des oder der virtuellen Übermittler **durch** einen oder mehrere Teilnehmer übemehmbar ist, wobei der virtuelle Übermittler für einen Funkverbindungsaufbau zwischen einem Signalsender und einem Signalempfänger dem Signalempfänger zugeordnet ist und wobei dem virtuellen Übermittler die Positionskennung eines vorherigen Aufenthaltsorts des Signalempfängers oder eine frei wählbare und nicht von einem anderen Teilnehmer belegte Positionskennung zugeordnet ist.

## Claims

1. Method for establishing a radio link between subscribers in a decentralised mobile radiotelephone network having mobile radiotelephone devices serving both as terminals and as transmitters,
**characterised in that** for each subscriber at least one virtual transmitter, distinguished substantially by a positional code, for transmitting the radio signals can be defined and one or more subscribers can assume the functionality of the virtual transmitter or transmitters, wherein for establishing a radio link between a signal transmitter and a signal receiver the virtual transmitter is assigned to the signal receiver and wherein the positional code of a previously visited location of the signal receiver or a freely selectable positional code not reserved by another subscriber is assigned to the virtual transmitter.

2. Method according to claim 1, **characterised in that** the subscriber or subscribers that assume the functionality of the virtual transmitter or transmitters individually or collectively realise the virtual transmitter or transmitters by assuming the functionality.

3. Method according to claim 1 or 2, **characterised in that** the radio signals are routed via the virtual transmitter to the signal receiver.

4. Method according to any one of claims 1 to 3, **characterised in that** the virtual transmitter transmits the new, amended positional code of the signal receiver to a previous transmitter and/or to the signal transmitter.

5. Method according to any one of claims 1 to 4, **characterised in that** the signal receiver calculates its new positional code from the monitored positional codes of its adjacent subscribers in its actual local area range.

6. Method according to any one of claims 1 to 5, **characterised in that** the virtual transmitter is defined by the signal receiver actively in response to a user action or automatically in dependence on fulfilment of a pre-settable condition.

7. Method according to claim 6, **characterised in that** the automatic definition is effected after the signal receiver has left its original local area range or after a pre-determinable or several pre-determinable subscribers located in the original local area range have left this or their original local area range or after the signal receiver has left the local area range of a pre-determinable or several pre-determinable subscribers.

8. Method according to any one of claims 1 to 7, **characterised in that** a location-related and/or a subscriber-related code is assigned to the subscribers.

9. Method according to any one of claims 1 to 8, **characterised in that** by defining several virtual transmitters, radio link structures in the form of tree structures, star structures, loop structures or mixed topological structures are created.

10. Decentralised mobile radiotelephone network having mobile radiotelephone devices serving both as terminals and as transmitters, for implementing the method according to any one of claims 1 to 9,
**characterised by** means for defining at least one virtual transmitter, distinguished substantially by a positional code, for transmitting the radio signals to each subscriber, wherein the functionality of the virtual transmitter or transmitters can be assumed by one or more subscribers, wherein for a establishing a radio link between a signal transmitter and a signal receiver the virtual transmitter is assigned to the signal receiver and wherein the positional code of a previously visited location of the signal receiver or a freely selectable positional code not reserved by another subscriber is assigned to the virtual transmitter.

## Revendications

1. Procédé d'établissement d'une communication radio entre des participants dans un réseau de téléphonie mobile organisé de manière décentralisée avec des téléphones mobiles servant aussi bien de terminaux que de transmetteurs, **caractérisé en ce qu'**au moins un transmetteur virtuel, caractérisé essentiellement par une caractéristique de position, peut être défini pour chaque participant pour la transmission des signaux radio et un ou plusieurs participants peuvent prendre en charge le travail du ou des transmetteurs virtuels, le transmetteur virtuel étant adjoint, pour l'établissement d'une communication radio entre un émetteur de signaux et un récepteur de signaux, au récepteur de signaux et la caractéristique de position d'un lieu de séjour précédent du récepteur de signaux ou une caractéristique de position pouvant être choisie librement et non occupée par un autre participant étant adjointe au transmetteur virtuel.

2. Procédé selon la revendication 1,
**caractérisé en ce que** le ou les participants qui prennent en charge le travail du ou des transmetteurs virtuels réalisent individuellement ou collectivement le ou les transmetteurs virtuels par la prise en charge du travail.

3. Procédé selon la revendication 1 ou 2,
**caractérisé en ce que** les signaux radio sont transmis aux récepteurs de signaux par les transmetteurs virtuels.

4. Procédé selon l'une des revendications 1 à 3,
**caractérisé en ce que** le transmetteur virtuel transmet la nouvelle caractéristique de position modifiée du récepteur de signaux à un transmetteur précédent et/ou à l'émetteur de signaux.

5. Procédé selon l'une des revendications 1 à 4,
**caractérisé en ce que** le récepteur de signaux calcule sa nouvelle caractéristique de position à partir des caractéristiques de position écoutées de ses participants voisins dans sa zone de voisinage actuelle.

6. Procédé selon l'une des revendications 1 à 5,
**caractérisé en ce que** le transmetteur virtuel est défini par le récepteur de signaux activement sur une action d'utilisation ou automatiquement en dépendance de l'exécution d'une condition prédéfinissable.

7. Procédé selon la revendication 6,
**caractérisé en ce que** la définition automatique a lieu après que le récepteur de signaux a quitté sa zone de voisinage d'origine ou bien après qu'un premier participant prédéfinissable ou plusieurs participants prédéfinissables ont quitté leur zone de voisinage d'origine ou bien après que le récepteur de signaux a quitté la zone de voisinage d'un participant prédéfinissable ou de plusieurs participants prédéfinissables.

8. Procédé selon l'une des revendications 1 à 7,
**caractérisé en ce qu'**une caractéristique rapportée au lieu et/ou rapportée au participant est adjointe aux participants.

9. Procédé selon l'une des revendications 1 à 8,
**caractérisé en ce que** des structures de communication radio, formées en tant que structures arborescentes, structures étoiles, structures cycliques ou structures topologiques mixtes, sont engendrées par la définition de plusieurs transmetteurs virtuels.

10. Réseau de téléphonie mobile organisé de manière décentralisée, avec des téléphones mobiles servant aussi bien de terminaux que de transmetteurs, pour la mise en oeuvre du procédé selon l'une des revendications 1 à 9,
**caractérisé par** des moyens pour définir au moins un transmetteur virtuel caractérisé essentiellement par une caractéristique de position pour transmettre les signaux radio à chaque participant, le travail du ou des transmetteurs virtuels pouvant être pris en charge par un ou plusieurs participants, le transmetteur virtuel étant adjoint, pour l'établissement d'une communication radio entre un émetteur de signaux et un récepteur de signaux, au récepteur de signaux et la caractéristique de position d'un lieu de séjour précédent du récepteur de signaux ou une caractéristique de position pouvant être choisie librement et non occupée par un autre participant étant adjointe au transmetteur virtuel.
